# EUROPÄISCHE PATENTSCHRIFT

(11) **EP 2 365 922 B1**
(45) Veröffentlichungstag und Bekanntmachung des Hinweises auf die Patenterteilung: **20.03.2013**
(21) Anmeldenummer: 09796685.7
(22) Anmeldetag: 15.12.2009
(51) Int. Cl.: F16H 55/28, B62D 3/12

(54) **VORRICHTUNG ZUM ANDRÜCKEN EINER ZAHNSTANGE**
DEVICE FOR PRESSING ON A GEAR RACK
DISPOSITIF D'APPLICATION D'UNE CRÉMAILLÈRE

(30) Priorität: 17.12.2008 DE 102008054782
(43) Veröffentlichungstag der Anmeldung: 21.09.2011
(73) Patentinhaber: ZF-Lenksysteme GmbH, 73527 Schwäbisch Gmünd (DE)
(72) Erfinder: BAREIS, Helmut, 73569 Eschach (DE)
(86) Internationale Anmeldenummer: PCT/EP2009/067145
(87) Internationale Veröffentlichungsnummer: WO 2010/069942

(56) Entgegenhaltungen:
- EP-A1- 1 136 342
- DE-A1-102004 053 462
- DE-A1-102006 008 269
- DE-A1-102006 043 578
- DE-U1- 20 114 759

## Beschreibung

Die Erfindung betrifft eine Vorrichtung zum Andrücken einer Zahnstange an ein mit der Zahnstange in Eingriff stehendes Ritzel, insbesondere für eine Lenkung eines Kraftfahrzeugs, mit einem in Richtung der Zahnstange belastbaren, in einem Gehäuse verschiebbar geführten Druckstück und einer Nachstelleinrichtung zum Ausgleichen eines in der Lenkung auftretenden Spiels.

Bei denen aus dem Stand der Technik bekannten gattungsgemäßen Vorrichtungen muss ein Spiel des Druckstücks mit einer Stellschraube eingestellt werden. Das Einstellen des Spiels bereitet häufig Probleme, da die Stellschraube gegen ein unbeabsichtigtes Lösen gesichert werden muss. Hierzu wird die Stellschraube häufig in ihrer endgültigen Einstellung verstemmt. Durch das Verstemmen und auch durch die Einwirkung von Kräften während des Betriebes kann sich das Spiel des Druckstücks unerwünschterweise verändern.

Des Weiteren offenbart Dokument DE 20 114 759 U1 die Präambel des Anspruchs 1.

Die Erfindung hat die Aufgabe die Vorrichtung der eingangs genannten Art dahingehend zu verbessern, das zukünftig die aufwändige Einstellung des Spiels des entfallen kann.

Die Erfindung löst die gestellte Aufgabe mit einer Vorrichtung der eingangs genannten Art, bei der erfindungsgemäß zwischen der Nachstelleinrichtung und dem Druckstück eine Federscheibe angeordnet ist, wobei die Nachstelleinrichtung einen Absatz und das Druckstück eine Ausnehmung oder das Druckstück einen Absatz und die Nachstelleinrichtung eine Ausnehmung im Bereich der Federscheibe aufweist. Somit bildet der Absatz der Nachstelleinrichtung oder des Druckstücks ein Spiel, das mindestens so groß ist, um beispielsweise Unebenheiten auf der Verzahnung zwischen einem Ritzel und einer Zahnstange, Unrundheiten des Ritzels, Parallelitätsfehler bezüglich der Verzahnung der Zahnstange und ihrem Rücken und andere toleranzbedingte Abweichungen auszugleichen. Die Ausnehmung im Druckstück oder in der Nachstelleinrichtung ermöglicht der Federscheibe einen Federweg, den diese benötigt, um das oben genannte Spiel auszugleichen. Folglich wird das erforderliche Spiel lediglich durch die konstruktive Auslegung des Absatzes und der Ausnehmung sichergestellt. Die problematische Einstellung einer Schraube kann somit entfallen.

Die Federscheibe kann in ihrem inneren Bereich mit mindestens einer Ausnehmung versehen sein. Somit weist die Federscheibe eine größere Dicke auf als eine ohne Ausnehmungen. Die Federscheibe mit größerer Dicke ist jedoch bezüglich Ebenheit und Toleranzen besser zu fertigen als die Federscheibe geringerer Dicke.

Damit die Federscheibe am Druckstück in einer genau definierten Position angeordnet werden kann, kann das Druckstück eine weitere Ausnehmung zur Aufnahme der Federscheibe aufweisen.

Um die Federscheibe in der weiteren Ausnehmung zu sichern, kann die weitere Ausnehmung einen verstemmbaren Rand aufweisen.

Eine Anpressfläche zwischen dem Druckstück und der Federscheibe und zwischen der Nachstelleinrichtung und der Federscheibe kann möglichst groß sein. Somit werden auf den Anpressflächen nur geringe Flächenpressungen erzeugt, so dass die Nachstelleinrichtung im Bereich der Federscheibe aus Kunststoff gefertigt sein kann.

In einer weiteren Ausführungsform kann die Nachstelleinrichtung an ihrer dem Druckstück gegenüberliegenden Seite im Randbereich eine vorzugsweise umlaufende Ausnehmung aufweisen. Die Ausnehmung befindet sich zweckmäßgerweise gegenüber des verstemmbaren Rands. Sie bildet somit einen Freiraum, der ein Anstoßen der Nachstelleinrichtung an das Druckstück vermeiden soll, wenn die Federscheibe ausgelenkt wird und dabei das Druckstück auf die Nachstelleinrichtung zubewegt wird.

Zweckmäßigerweise kann der Absatz jedoch etwas größer sein als das auszugleichende Spiel. Eine Axialkraft der Nachstelleinrichtung bewirkt nämlich eine minimale Auslenkung der Federscheibe, wodurch das Spiel, das für den Ausgleich der genannten Abweichungen noch zur Verfügung steht, reduziert werden kann. Deshalb ist sinnvoll den Absatz, um diese minimale Auslenkung der Federscheibe größer zu dimensionieren.

Erfindungsgemäß weist die Nachstelleinrichtung zwei relativ zueinander verdrehbare Scheiben, welche an Kontaktflächen aneinander anliegen, auf, wobei die Kontaktflächen mindestens zwei schräge Flächensegmente aufweisen. Die beiden Scheiben können durch eine Drehfeder relativ zueinander verdreht werden. Die Nachstelleinrichtung kann somit selbsttätig ein im Laufe des Betriebes entstehendes verschleißbedingtes Spiel oder ein Setzen der Zahnstange, des Druckstücks oder einer dazwischen angeordneten Folie ausgleichen. Die Scheiben können aufgrund der geringen Flächenpressung zwischen ihnen und der Federscheibe aus Kunststoff gefertigt sein.

Zweckmäßigerweise ist die Federscheibe bei dieser Weiterbildung der Erfindung zwischen der dem Druckstück benachbarten Scheibe und dem Druckstück angeordnet.

Um einen Freiraum zu bilden, der ein Anstoßen der Nachstelleinrichtung an das Druckstück vermeiden soll, wenn die Federscheibe ausgelenkt wird und dabei das Druckstück auf die Nachstelleinrichtung zubewegt wird, kann die dem Druckstück benachbarte Scheibe an ihrer dem Druckstück gegenüberliegenden Seite im Randbereich eine vorzugsweise umlaufende Ausnehmung aufweisen.

In der Praxis zeigt die erfindungsgemäße Vorrichtung besonders gute Ergebnisse, wenn die Federscheibe eine Dicke zwischen 0,5 Millimeter und 0,7 Millimeter aufweist.

Da die Federscheibe ein in großen Stückzahlen hergestelltes Bauteil ist, kann sie besonders kostengünstig hergestellt werden, wenn sie ein Stanzteil ist.

Die Erfindung betrifft außerdem ein Kraftfahrzeug, das erfindungsgemäß eine Vorrichtung nach einem der Ansprüche 1 bis 12 aufweist.

Nachfolgend wird ein Ausführungsbeispiel der erfindungsgemäßen Vorrichtung anhand der beiliegenden Zeichnungen näher erläutert.
- Fig. 1: eine Schnittansicht durch ein Druckstück und eine Nachstelleinrichtung;
- Fig. 2: eine Detailansicht von Fig. 1;
- Fign. 3a und 3b: eine Detailansicht von Fig. 2 im Bereich einer Federscheibe im ausgelenkten und nicht ausgelenkten Zustand;
- Fig. 4: eine Draufsicht auf die Federscheibe;
- Fig. 5: eine Schnittansicht durch eine Nachstelleinrichtung;
- Fig. 6: eine perspektivische Ansicht auf eine Scheibe der Nachstelleinrichtung aus Fig. 5.

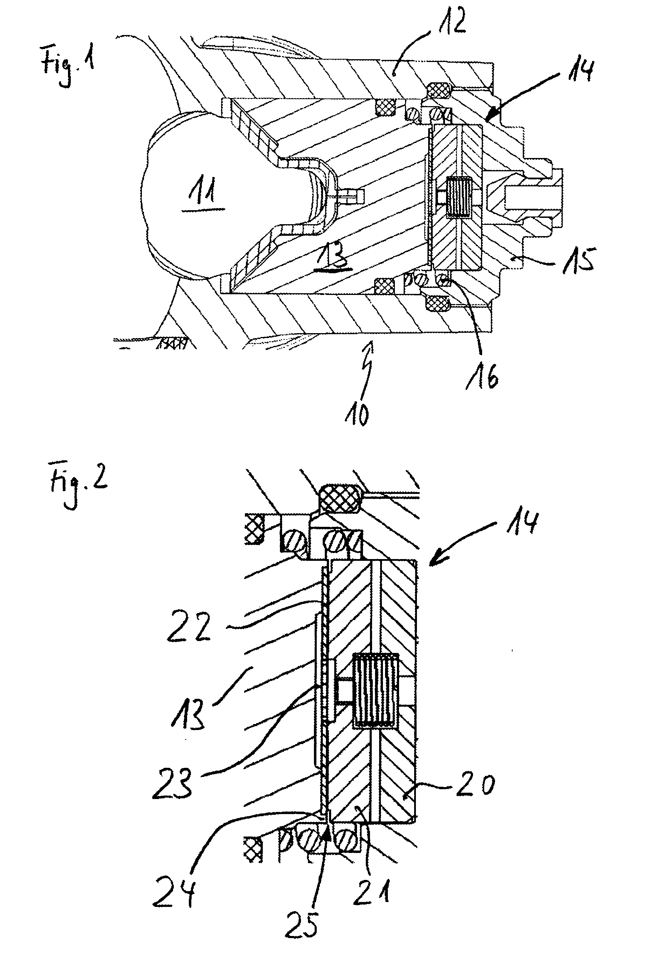

Fig. 1 zeigt eine Vorrichtung 10 zum Andrücken einer Zahnstange 11 an ein hier nicht näher dargestelltes Ritzel. In einem Gehäuse 12 ist ein Druckstück 13 verschiebbar geführt. Benachbart zum Druckstück 13 ist eine Nachstelleinrichtung 14 angeordnet.

Zwischen einer Stellschraube 15 und dem Druckstück 13 ist eine Druckfeder 16 angeordnet, die das Druckstück 13 gegen die Zahnstange 11 drückt.

Zwischen der Nachstelleinrichtung 14, die zwei Scheiben 20 und 21 aufweist, und dem Druckstück 13 ist eine Federscheibe 22 angeordnet. Im Bereich der Federscheibe 22 ist im Druckstück 13 eine Ausnehmung 23 vorgesehen (siehe Fig. 2).

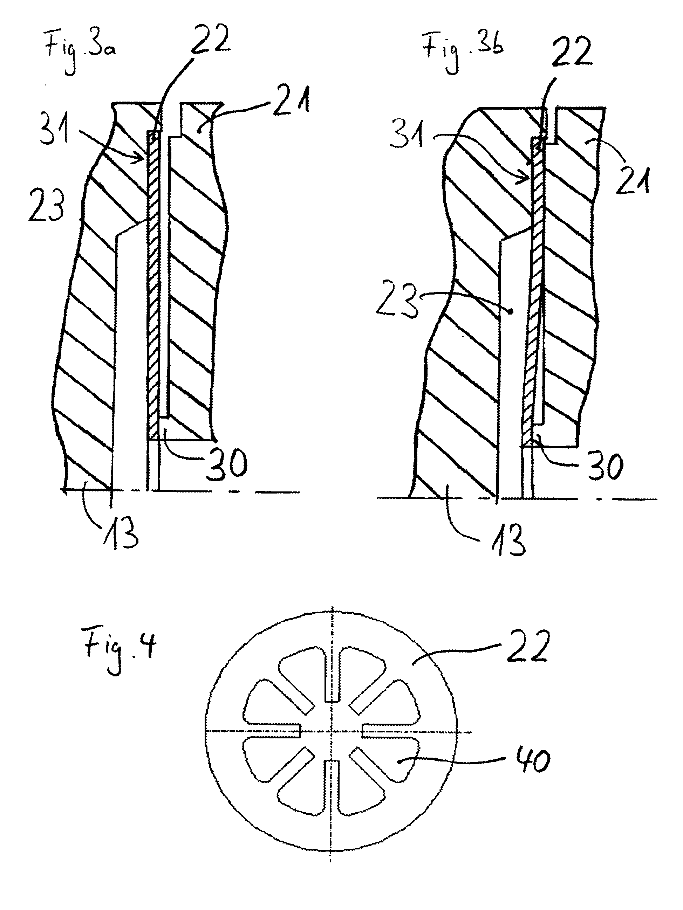

Die Scheibe 21 weist einen Absatz 30 auf, der an der Federscheibe 22 anliegt (siehe Fign. 3a und 3b). Die Höhe des Absatzes 30 entspricht mindestens einem Spiel, das beispielsweise Unebenheiten auf der Verzahnung zwischen dem Ritzel und der Zahnstange 11, Unrundheiten des Ritzels, Parallelitätsfehler bezüglich der Verzahnung der Zahnstange 11 und ihrem Rücken und anderen toleranzbedingten Abweichungen entspricht.

Die Federscheibe 22 liegt auf einer ringförmigen Anpressfläche 31 am Druckstück 13 an. Die Anpressfläche 31 ist möglichst groß, damit die Flächenpressung zwischen der Federscheibe 22 und dem Druckstück 13 einerseits und der Federscheibe 22 und der Scheibe 21 andererseits möglichst gering ist. Bei einer möglichst geringen Flächenpressung kann die Scheibe 21 problemlos aus Kunststoff gefertigt werden.

Fig. 3a zeigt die Federscheibe 22 im nicht ausgelenkten Zustand. Im nicht ausgelenkten Zustand liegt lediglich der Absatz 30 der Scheibe 21 an der Federscheibe 22 an.

Im ausgelenkten Zustand (siehe Fig. 3b) liegt sowohl der Absatz 30 an der Federscheibe 22 an als auch ein größerer äußerer Bereich der Scheibe 21. Insbesondere der Bereich der Scheibe 21, welcher der Anpressfläche 31 gegenüberliegt, erfährt eine besonders hohe Flächenpressung.

Wenn die oben genannten Abweichungen ausgeglichen werden müssen, wird also das Druckstück 13 gegen die Nachstelleinrichtung 14 oder gegen die Scheibe 21 gedrückt (siehe Fign. 2 und 3b), wobei gleichzeitig auch die Federscheibe 22 gegen den Absatz 30 gedrückt wird, so dass die Federscheibe 22 in die Ausnehmung 23 ausgelenkt wird (siehe Fig. 3b).

Die Federscheibe 22 weist eine Ausnehmung 40 auf (siehe Fig. 4), weshalb die Federscheibe 22 eine größere Dicke aufweist als eine Federscheibe ohne Ausnehmung 40. Die Federscheibe 22 mit größerer Dicke ist jedoch bezüglich Ebenheit und Toleranzen besser zu fertigen als die Federscheibe ohne Ausnehmung 40.

Die Federscheibe 22 ist in einer einen Rand 24 aufweisenden Ausnehmung platziert (siehe Fig. 2). Der Rand 24 kann zur Fixierung der Federscheibe 22 verstemmt werden.

Gegenüber des Rands 24 befindet sich eine Ausnehmung 25 (siehe Fig. 2), die eine Kollision der Scheibe 21 mit dem Druckstück 13 verhindert, wenn die Federscheibe 22 ausgelenkt wird.

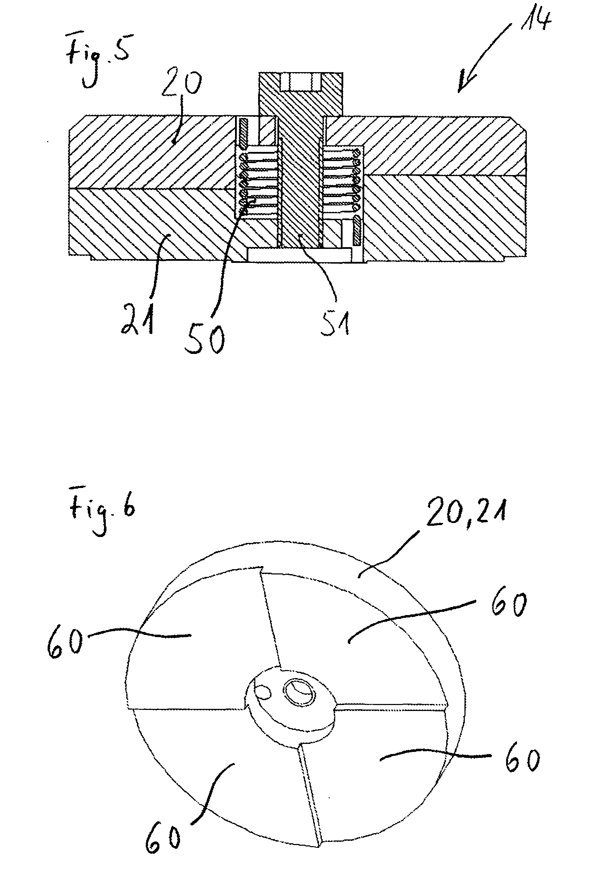

Fig. 5 zeigt die Nachstelleinrichtung 14, die die beiden Scheiben 20 und 21 aufweist. Die Scheiben 20 und 21 sind mit schräge Flächensegmente 60 aufweisenden Kontaktflächen versehen (siehe Fig. 6). Die Flächensegmente 20 und 21 sind durch eine Drehfeder 50 relativ zueinander verdrehbar, wodurch sich die Gesamtdicke der beiden Scheiben 20 und 21 vergrößert. Die Schräge der Flächensegmente ist relativ gering. Somit wird ein Verdrehen der Scheiben 20 und 21 entgegengesetzt zur Drehrichtung der Drehfeder 50 verhindert.

Die Nachstelleinrichtung 14 kann als eine Montageeinheit vormontiert werden. Zu diesem Zweck werden die beiden Scheiben 20 und 21 mittels einer Schraube 51 aneinander befestigt und am Verdrehen gehindert. Im montierten Zustand weisen die beiden Scheiben 20 und 21 eine minimale Gesamtdicke auf.

Nach der Montage der Druckfeder 16 (siehe Fig. 1) wird die Stellschraube 15 mit einem ganz bestimmten Drehmoment angezogen, so dass das durch den Absatz 30 realisierte Spiel überbrückt wird. Anschließend wird die Stellschraube 15 wieder um einen bestimmten Winkel geöffnet, wobei der Öffnungswinkel dem durch den Absatz 30 realisierte Spiel entsprechen sollte. Sollte jedoch die Stellschraube um einen größeren Winkel geöffnet werden, so dass dadurch die Nachstelleinrichtung in axialer Richtung 14 einen Weg zurücklegt, der größer ist als das durch den Absatz 30 realisierte Spiel, so kann dies nach dem Entfernen der Schraube 51 durch die Nachstelleinrichtung 14 ausgeglichen werden. Die Stellschraube 15 kann beispielsweise durch eine Verklebung gesichert werden. Es sind jedoch auch andere, dem Fachmann bekannte Möglichkeiten zur Sicherung der Stellschraube 15 denkbar.

### Bezugszeichenliste

- 10: Vorrichtung
- 11: Zahnstange
- 12: Gehäuse
- 13: Druckstück
- 14: Nachstelleinrichtung
- 15: Stellschraube
- 16: Druckfeder

- 20: Scheibe
- 21: Scheibe
- 22: Federscheibe
- 23: Ausnehmung
- 24: Absatz
- 25: Ausnehmung

- 30: Absatz
- 31: Anpressfläche

- 40: Ausnehmung

- 50: Drehfeder
- 51: Schraube

- 60: Flächensegment

## Patentansprüche

1. Vorrichtung (10) zum Andrücken einer Zahnstange (11) an ein mit der Zahnstange (11) in Eingriff stehendes Ritzel, insbesondere für eine Lenkung eines Kraftfahrzeugs, mit einem in Richtung der Zahnstange (11) belastbaren, in einem Gehäuse (12) verschiebbar geführten Druckstück (13) und einer Nachstelleinrichtung (14) zum Ausgleichen eines in der Lenkung auftretenden Spiels, wobei die Nachstelleinrichtung (14) zwei relativ zueinander verdrehbare Scheiben (20, 21), welche an Kontaktflächen aneinander anliegen, aufweist und die Kontaktflächen mindestens zwei schräge Flächensegmente (60) aufweisen, **dadurch gekennzeichnet, dass** zwischen der Nachstelleinrichtung (14) und dem Druckstück (13) eine Federscheibe (22) angeordnet ist, wobei die Nachstelleinrichtung (14) einen Absatz (30) und das Druckstück (13) eine Ausnehmung oder das Druckstück einen Absatz und die Nachstelleinrichtung eine Ausnehmung im Bereich der Federscheibe (22) aufweist, wobei die Größe des Absatzes (30) ein Spiel des Druckstücks definiert.

2. Vorrichtung (10) nach Anspruch 1, **dadurch gekennzeichnet, dass** die Federscheibe (22) in ihrem inneren Bereich mit mindestens einer Ausnehmung (40) versehen ist.

3. Vorrichtung (10) nach Anspruch 1 oder 2, **dadurch gekennzeichnet, dass** das Druckstück (13) eine weitere Ausnehmung zur Aufnahme der Federscheibe (22) aufweist.

4. Vorrichtung (10) nach Anspruch 3, **dadurch gekennzeichnet, dass** die weitere Ausnehmung einen verstemmbaren Rand (24) aufweist.

5. Vorrichtung (10) nach einem der Ansprüche 1 bis 4, **dadurch gekennzeichnet, dass** eine Anpressfläche (31) zwischen dem Druckstück (13) und der Federscheibe (22) und zwischen der Nachstelleinrichtung (14) und der Federscheibe (22) möglichst groß ist.

6. Vorrichtung (10) nach einem der Ansprüche 1 bis 5, **dadurch gekennzeichnet, dass** die Nachstelleinrichtung (14) an ihrer dem Druckstück (13) gegenüberliegenden Seite im Randbereich eine Ausnehmung (25) aufweist.

7. Vorrichtung (10) nach einem der Ansprüche 1 bis 6, **dadurch gekennzeichnet, dass** der Absatz (30) etwas größer ist als ein erforderliches Spiel des Druckstücks (13).

8. Vorrichtung (10) nach Anspruch 1, **dadurch gekennzeichnet, dass** die Federscheibe (22) zwischen der dem Druckstück (13) benachbarten Scheibe (21) und dem Druckstück (13) angeordnet ist.

9. Vorrichtung (10) nach Anspruch 1, **dadurch gekennzeichnet, dass** die dem Druckstück (13) benachbarte Scheibe (21) an ihrer dem Druckstück (13) gegenüberliegenden Seite im Randbereich eine Ausnehmung (25) aufweist.

10. Vorrichtung (10) nach einem der Ansprüche 1 bis 8, **dadurch gekennzeichnet, dass** die Federscheibe (22) eine Dicke zwischen 0,5 Millimeter und 0,7 Millimeter aufweist.

11. Vorrichtung (10) nach einem der Ansprüche 1 bis 10, **dadurch gekennzeichnet, dass** die Federscheibe (22) ein Stanzteil ist.

## Claims

1. Device (10) for pressing a gear rack (11) onto a pinion engaged with the gear rack (11), in particular for a steering system of a motor vehicle, with a thrust piece (13) loadable in the direction of the gear rack (11) and guided displaceably in a housing (12) and with an adjusting means (14) for compensating a play which occurs in the steering system, the adjusting means (14) having two discs (20, 21) which are rotatable in relation to one another and bear one against one another at contact faces, and the contact faces having at least two oblique face segments (60), **characterized in that** a spring washer (22) is arranged between the adjusting means (14) and the thrust piece (13), the adjusting means (14) having a step (30) and the thrust piece (13) having a recess, or the thrust piece having a step and the adjusting means having a recess in the region of the spring washer (22), the size of the step (30) defining a play of the thrust piece.

2. Device (10) according to Claim 1, **characterized in that** the spring washer (22) is provided in its inner region with at least one recess (40).

3. Device (10) according to Claim 1 or 2, **characterized in that** the thrust piece (13) has a further recess for receiving the spring washer (22).

4. Device (10) according to Claim 3, **characterized in that** the further recess has a caulkable margin (24).

5. Device (10) according to one of Claims 1 to 4, **characterized in that** a press-on face (31) between the thrust piece (13) and the spring washer (22) and between the adjusting means (14) and the spring washer (22) is as large as possible.

6. Device (10) according to one of Claims 1 to 5, **characterized in that** the adjusting means (14) has, on its side lying opposite the thrust piece (13), a recess (25) in the marginal region.

7. Device (10) according to one of Claims 1 to 6, **characterized in that** the step (30) is somewhat larger than a necessary play of the thrust piece (13).

8. Device (10) according to Claim 1, **characterized in that** the spring washer (22) is arranged between the disc (21) adjacent to the thrust piece (13) and the thrust piece (13).

9. Device (10) according to Claim 1, **characterized in that** the disc (21) adjacent to the thrust piece (13) has, on its side lying opposite the thrust piece (13), a recess (25) in the marginal region.

10. Device (10) according to one of Claims 1 to 8, **characterized in that** the spring washer (22) has a thickness of between 0.5 millimetres and 0.7 millimetres.

11. Device (10) according to one of Claims 1 to 10, **characterized in that** the spring washer (22) is a stamped part.

## Revendications

1. Dispositif (10) pour presser une crémaillère (11) contre un pignon en prise avec la crémaillère (11), en particulier pour une direction d'un véhicule automobile, comprenant une pièce de pression (13) guidée de manière coulissante dans un boîtier (12), pouvant être sollicitée dans une direction de la crémaillère (11), et un dispositif de réglage (14) pour compenser un jeu se produisant dans la direction, le dispositif de réglage (14) présentant deux disques (20, 21) pouvant tourner l'un par rapport à l'autre, qui s'appliquent l'un contre l'autre au niveau de surfaces de contact, et les surfaces de contact présentant au moins deux segments de surface obliques (60), **caractérisé en ce qu'**entre le dispositif de réglage (14) et la pièce de pression (13) est disposée une rondelle élastique (22), le dispositif de réglage (14) présentant un épaulement (30) et la pièce de pression (13) présentant un évidement ou la pièce de pression présentant un épaulement et le dispositif de réglage présentant un évidement dans la région de la rondelle élastique (22), la taille de l'épaulement (30) définissant un jeu de la pièce de pression.

2. Dispositif (10) selon la revendication 1, **caractérisé en ce que** la rondelle élastique (22) est pourvue dans sa région intérieure d'au moins un évidement (40).

3. Dispositif (10) selon la revendication 1 ou 2, **caractérisé en ce que** la pièce de pression (13) présente un évidement supplémentaire pour recevoir la rondelle élastique (22).

4. Dispositif (10) selon la revendication 3, **caractérisé en ce que** l'évidement supplémentaire présente un bord pouvant être rabattu (24).

5. Dispositif (10) selon l'une quelconque des revendications 1 à 4, **caractérisé en ce qu'**une surface de pressage (31) entre la pièce de pression (13) et la rondelle élastique (22) et entre le dispositif de réglage (14) et la rondelle élastique (22) est aussi grande que possible.

6. Dispositif (10) selon l'une quelconque des revendications 1 à 5, **caractérisé en ce que** le dispositif de réglage (14) présente, sur son côté opposé à la pièce de pression (13), un évidement (25) dans la région du bord.

7. Dispositif (10) selon l'une quelconque des revendications 1 à 6, **caractérisé en ce que** l'épaulement (30) est un peu plus grand qu'un jeu nécessaire de la pièce de pression (13).

8. Dispositif (10) selon la revendication 1, **caractérisé en ce que** la rondelle élastique (22) est disposée entre le disque (21) adjacent à la pièce de pression (13) et la pièce de pression (13).

9. Dispositif (10) selon la revendication 1, **caractérisé en ce que** le disque (21) adjacent à la pièce de pression (13) présente, sur son côté opposé à la pièce de pression (13), un évidement (25) dans la région du bord.

10. Dispositif (10) selon l'une quelconque des revendications 1 à 8, **caractérisé en ce que** la rondelle élastique (22) présente une épaisseur comprise entre 0,5 millimètre et 0,7 millimètre.

11. Dispositif (10) selon l'une quelconque des revendications 1 à 10, **caractérisé en ce que** la rondelle élastique (22) est une pièce estampée.
